Europäisches Patentamt

European Patent Office

Office européen des brevets

(19)

(11) Veröffentlichungsnummer: **0 017 677**
A 1

# (12) EUROPÄISCHE PATENTANMELDUNG

(21) Anmeldenummer: **79200240.4**

(22) Anmeldetag: **18.05.79**

(51) Int. Cl.³: **F 16 B 4/00,** H 01 R 4/70

(30) Priorität: **24.04.79 CH 3825/79**

(43) Veröffentlichungstag der Anmeldung: **29.10.80**
**Patentblatt 80/22**

(84) Benannte Vertragsstaaten: **BE CH DE FR GB IT LU NL SE**

(71) Anmelder: **BBC Brown, Boveri & Cie.**
**(Aktiengesellschaft), CH-5401 Baden (CH)**

(72) Erfinder: **Melton, Keith, Dr., Sonnenrainstrasse 291,**
**CH-5453 Busslingen (CH)**
Erfinder: **Mercier, Olivier, Dr., Geissbergstrasse 19,**
**CH-5400 Ennetbaden (CH)**
Erfinder: **Schröder, Günther, Dr., Dolderweg 597,**
**CH-5413 Birmenstorf (CH)**

(54) **Verfahren zum Verbinden von länglichen Einzelteilen mit Verbindungselementen aus Formgedächtnislegierung.**

(57) Einzelteile, wie Glasfasern (41, 42), werden mit Verbindungselementen (20) aus Formgedächtnislegierung verbunden; als Verbindungselement wird ein beispielsweise blech- oder plattenförmiger Körper (10, 20, 51) mit mindestens einer praktisch zylindrischen Durchbrechung (30), verwendet, die annähernd senkrecht zu den Oberflächen des Körpers (10, 20) verläuft; die kleinste Abmessung der Oberflächen der Körper ist um ein Mehrfaches grösser als der Durchmesser der Durchbrechungen. Die Körper (10) werden bei (T) $M_f$ unter zweiachsiger Dehnung in der Hauptebene verformt (20) und springen bei (T) $A_f$ wieder annähernd in die Gestalt (51) vor der Verformung zurück. Die Einzelteile (41, 42) werden bei (T) $M_f$ in die Durchbrechungen (30) eingeführt und durch Zurückspringen der Körper (20) bei (T) $A_f$ in ihre Gedächtnisform (10, 51) in der Verbindung (51) kraftschlüssig gehalten.

0017677

Verfahren zum Verbinden von länglichen Einzelteilen mit Verbindungselementen aus Formgedächtnislegierung

Die Erfindung betrifft ein Verfahren zur kraftschlüssigen
Verbindung der Enden länglicher Einzelteile, insbesondere
Glasfasern, mit Verbindungselementen aus Formgedächtnislegierung (im folgenden auch kurz als FG-Legierungen bezeichnet) sowie ein Verbindungselement zur Durchführung des Verfahrens und die nach dem Verfahren erhaltenen Verbindungen.

Formgedächtnislegierungen sind als Werkstoffklasse und in
verschiedenen Zusammensetzungen bekannt (siehe z. B. U.S.-
PS 3'012'882 und 3'174'851). Gemeinsam ist diesen Werkstoffen die Fähigkeit zu einer thermisch induzierbaren sprunghaften Formveränderung beim Uebergang vom martensitischen
in den austenitischen Zustand; wird beispielsweise ein Körper aus FG-Legierung in austenitischem Zustand gebildet,
dann durch Temperaturverminderung in den martensitischen
Zustand gebracht und in diesem Zustand mechanisch verformt,
so nimmt er beim Wiedererwärmen unter Rückbildung des austenitischen Zustandes praktisch wieder die Gestalt ("Gedächtnisform") an, die er vor der Verformung im martensitischen Zustand hatte.

Allgemein kann eine FG-Legierung durch einen "kritischen Temperaturbereich" charakterisiert werden, in welchem der martensitische Zustand in den austenitischen Zustand übergeht, und umgekehrt; dieser Temperaturbereich (im folgenden als Martensit/Austenit-Umwandlungstemperatur oder als kritische Temperatur $T_k$ bezeichnet) ist der Bereich zwischen den Temperaturen (T), bei welchen der martensitische Gefügezustand der FG-Legierung stabil ist ($M_f$), und den Temperaturen, bei welchen der austenitische Gefügezustand stabil ist ($A_f$), d. h. (T) $M_f$ < $T_k$ < (T) $A_f$.

Wenn dieser Formgedächtniseffekt praktisch nur beim Uebergang (T) $M_f \longrightarrow$ (T) $A_f$ und nicht in umgekehrter Richtung auftritt, wird er als "Einwegeffekt" bezeichnet; ist er mindestens teilweise thermisch reversibel, d. h. tritt er sowohl bei (T) $M_f \longrightarrow$ (T) $A_f$ als auch bei (T) $A_f \longrightarrow$ (T) $M_f$ auf, wird er als "Zweiwegeffekt" bezeichnet (siehe hierzu z. B. DE-OS 27 24 255 der Anmelderin).

Verbindungselemente aus verschiedenen FG-Legierungen in Form von Muffen oder muffenähnlichen Rohrgebilden sind z. B. aus der DE-OS 20 65 651 zur Verbindung von Rohren, z. B. Brennstoffleitungen, bekannt. Verbindungsmuffen aus FG-Legierungen sind ferner bereits von der Anmelderin auch für die vakuumdichte Metall/Keramik-Verbindung von Rohren und Stäben vorgeschlagen worden (CH-Patentanmeldung Nr. 8509/78).

Bei den bekannten muffenförmigen Verbindungselementen dieser Art ist die Wandstärke der Muffe kleiner als oder höchstens etwa ebenso gross wie die lichte Weite der Muffenöffnung. Die für die Verbindung von Rohren oder Stäben mit Muffen aus FG-Legierung erforderliche Rückstellfähigkeit des Verbindungselementes wird dabei dadurch erzielt, dass die in austenitischem Zustand (z. B. bei normaler Umgebungstemperatur) gefertigte Muffe durch Abkühlung, z. B. mit flüssigem Stickstoff, auf $M_f$-Temperatur gekühlt und bei $M_f$-Temperatur durch Hindurchziehen eines Dornes so stark aufgeweitet wird, dass die Enden der miteinander zu verbindenden Rohre oder Stäbe in die Muffenöffnung eingeschoben werden können. Eine übermässige Dehnung muss dabei vermieden werden, da sonst die für eine feste Verbindung erforderliche Rückstellfähigkeit nicht mehr erreichbar ist.

Dabei ist das nachträgliche Aufweiten der Muffe fertigungstechnisch problematisch und die erzielbare Passungsgenauigkeit der Muffe beschränkt. Der beim nachfolgenden Wiedererwärmen der Muffe auf $A_f$-Temperaturen erfolgenden Rückstellung ("Entspannung") des Verbindungselementes zum kraftschlüssigen Anliegen an die bei $M_f$-Temperaturen eingesetzten Einzelteile sind Grenzen dadurch gesetzt, dass bei den bisher bekannten FG-Legierungen Dehnungen im $M_f$-Zustand von nur bis etwa 8 % (Bei Einwegeffekt) bzw. bis etwa 1,5 % (bei Zweiwegeffekt) beim Ueberschreiten von $T_k$ und Erreichen des $A_f$-Zustandes zurückgestellt werden. Deshalb ist eine relativ hohe Passungsgenauigkeit der Verbindungselemente, insbesondere was die Durchbrechungen betrifft, wünschbar.

Der bekannten Technik zur Verbindung von Einzelteilen mit muffenartig durchbrochenen Elementen aus FG-Legierung sind daher zunächst dadurch Grenzen gesetzt, dass praktisch nur Rohre bzw. Stäbe mit gewissen Mindestdurchmessern von einigen mm verbunden werden können. Nachteilig bei den bekannten muffenförmigen Verbindungselemen-

ten aus FG-Legierung ist ferner, dass praktisch nur die technisch unbefriedigende Aufweitung der Muffenöffnung mit Dornen oder dergleichen zur mechanischen Spannung (bei $M_f$-Temperatur) geeignet ist und dass ferner für jede Verbindung der Enden eines Rohr- und/oder Stab-Paares jeweils eine Muffe aus FG-Legierung benötigt wird.

Aufgabe der Erfindung ist eine neue Verbindungstechnik mit Formgedächtnislegierungen, mit welcher Technik sich auch praktisch beliebig dünne Einzelteile, z. B. Glasfasern, Drähte, Filamente und dergleichen, miteinander verbinden lassen, die Verbindung einer Mehrzahl von Einzelteilchen mit einem einzigen Verbindungselement erzielbar ist, die mechanische Spannung des Verbindungselementes nach verschiedenen, vergleichsweise einfacheren bzw. besser steuerbaren Methoden erreicht werden kann und auch eine verbesserte Passungsgenauigkeit ermöglicht wird.

Die Aufgabe wird erfindungsgemäss dadurch gelöst, dass man bei einem Verfahren der oben beschriebenen Art als Verbindungselement einen beispielsweise platten- oder blechförmig ausgebildeten Körper aus Formgedächtnislegierung verwendet, der zwei annähernd parallele und praktisch senkrecht zur Längsachse der mindestens einen Durchbrechung verlaufende Aussenflächen besitzt, deren jeweils kleinste Abmessungen um ein Mehrfaches, d. h. mehr als das Doppelte grösser sind, als die lichte Weite (Durchmesser quer zur Axialrichtung) der mindestens einen Durchbrechung, und dass man den Körper zur mechanischen Spannung des Verbindungselementes im martensitischen Zustand ($M_f$) der Formgedächtnislegierung unter zweiachsiger Dehnung in der zu den Aussenflächen parallelen Haupt- oder Bezugsebene des Körpers verformt.

0017677

Die Form der genannten Aussenflächen des Körpers kann regelmässig, z. B. rechteckig, polygonal, kreisförmig bzw. oval oder unregelmässig sein, solange die kleinste Abmessung dieser Aussenflächen um ein Mehrfaches grösser ist als der Durchbrechungsdurchmesser.

Die "Dicke" des Verbindungselementes, d. h. der Abstand zwischen den genannten Aussenflächen des Körpers, ist an sich nicht besonders kritisch, solange eine entsprechende Verbindungslänge der Einzelteile gewährleistet ist und der Körper im $M_f$-Zustand durch Verformen gespannt werden kann. In der Regel ist die Dicke des Verbindungselementes mindestens ebenso gross, wie und vorzugsweise grösser als der Durchmesser der Durchbrechung(en).

Ein solches Verbindungselement aus FG-Legierung kann im $M_f$-Zustand, d. h. unter $T_k$ der jeweils verwendeten Legierung, nach ganz unterschiedlichen Methoden gespannt werden, die eine in der zu den genannten Aussenflächen parallelen Ebene betrachtet zweiachsige Dehnung des Verbindungselementes erzeugen. Beispielsweise kann ein blech- oder plattenförmiges erfindungsgemässes Verbindungselement im $M_f$-Zustand durch Stauchen, Pressen (Krafteinwirkung praktisch senkrecht zu den Aussenflächen) oder durch Kreuzwalzen oder Streckziehen in zwei vorzugsweise zueinander normalen Richtungen (Krafteinwirkungen praktisch parallel zur Hauptebene) mechanisch gespannt werden. Im allgemeinen wird eine praktisch brauchbare Spannung bei zweiachsiger Dehnung von einigen Prozenten, d. h. 1-8 % Längenzunahme in jeder der beiden Achsen, erzielt.

Die Durchbrechung(en) des erfindungsgemäss verwendeten Verbindungselementes ist (sind) zur Aufnahme der Enden der miteinander zu verbindenden Gebilde bzw. Gebildepaare, z. B. Glasfasern bzw. Glasfaserpaare, im mechanisch gespannten $M_f$-Zustand des Verbindungselementes und zur kraftschlüssigen Verbindung der Gebilde bzw. Gebildepaare im $A_f$- (Gedächtnisform) Zustand des Verbindungselementes bestimmt und können entsprechend bemessen werden. Die Durchbrechung(en) kann bzw. können grundsätzlich sowohl im mechanisch gespannten oder ungespannten $M_f$-Zustand als auch im $A_f$-Zustand des Verbindungselementes gebildet werden.

Gemäss einer bevorzugten Ausführungsform wird (werden) die Durchbrechung(en) des Verbindungselementes im martensitischen Zustand der FG-Legierung, und zwar nach dem Spannen, gebildet; dadurch kann eine unerwünschte nachträgliche Verzerrung von beispielsweise zylindrischen Durchbrechungen durch das mechanische Spannen vermieden werden. Dabei soll der $M_f$-Zustand der FG-Legierung erhalten bleiben, was durch entsprechende Kühlung und/oder Wahl entsprechender Bearbeitungsverfahren, z. B. thermisches Bohren mit Laserstrahl, Erodieren, ECM-Verfahren und dergleichen, erzielt werden kann.

Das erfindungsgemässe Verfahren ist insbesondere zur kraftschlüssigen Verbindung von Glasfasern mit typischen Dicken von 50-1000 Mikrometer oder mehr geeignet. Solche Glasfasern sind unter anderem für optische Leiter von Bedeutung und erfindungsgemässe Verbindungselemente können z. B. zur Verbindung der Enden eines Glasfaserpaares oder einer Vielzahl von Glasfaserpaaren verwendet werden.

Für die meisten Anwendungsfälle ist es zweckmässig, dass die $T_k$-Temperatur, d. h. der Bereich zwischen (T) $M_f$ und (T) $A_f$, unter Raumtemperatur, vorzugsweise unter $0^\circ C$ und meist unter $-20^\circ C$, liegt.

Geeignete FG-Legierungen für das Verbindungselement können aus den Publikationen zum Stand der Technik der FG-Legierungen gewählt werden. Beispiele für spezielle Gruppen von FG-Legierungen sind Legierungen, die als Hauptkomponenten Ni/Ti oder Ni/Ti/Cu oder Cu/Al/Ni oder Cu/Zn/Al enthalten. Die zuletzt genannte Gruppe ist für viele Zwecke bevorzugt.

Die Erfindung wird anhand der Zeichnungen erläutert. Es zeigen:

Fig. 1 die halbschematische, perspektivische Darstellung eines Körpers aus FG-Legierung vor dem mechanischen Spannen,

Fig. 2 den Körper von Fig. 1 nach dem Spannen in martensitischem Zustand,

Fig. 3 den Körper von Fig. 2 mit der Durchbrechung als Verbindungselement,

Fig. 4 das Verbindungselement von Fig. 3 mit in die Durchbrechung eingesetzten Glasfasern,

Fig. 5 das Verbindungselement von Fig. 4 nach Rückstellung des Körpers aus FG-Legierung,

Fig. 6 ein Körperpaar aus FG-Legierung mit je einem Faserende in jedem Körper des Paares, und

Fig. 7 das Körperpaar von Fig. 6 in einer Halterungsmuffe.

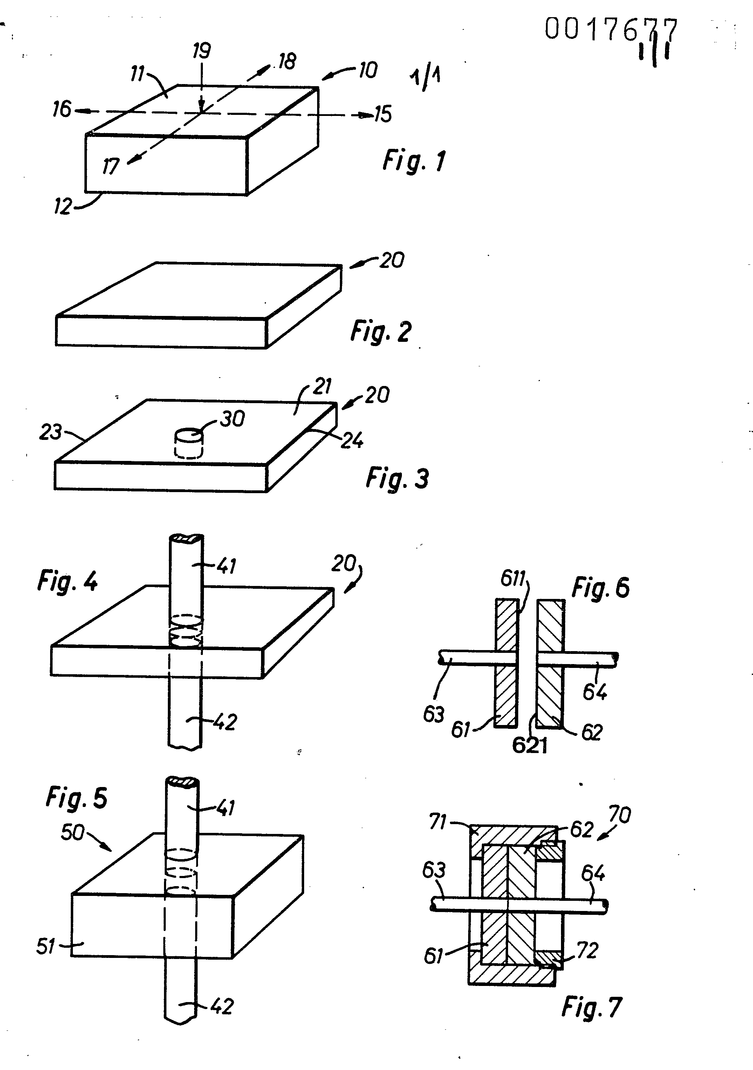

Der in Fig. 1 halbschematisch und vergrössert dargestellte platten- oder blockförmige Körper 10 besteht aus einer Formgedächtnislegierung, z. B. aus Cu/Al/Zn ($T_k$ $-20^\circ C$)

Der bei Normaltemperatur in austenitischem Zustand vorliegende Körper 10 wird, z. B. durch Tauchen in flüssigen Stickstoff, auf eine (T) $M_f$ z. B. von etwa -200°C
abgekühlt und in diesem Zustand mechanisch verformt, ohne dass er die $T_k$-Temperatur erreicht. Hierzu kann der
Körper 10, gegebenenfalls unter Kühlung, durch eine in
Richtung des Pfeiles 19, d. h. annähernd senkrecht zur
Hauptebene des Körpers 10 wirkende Stauch- oder Presskraft, zur Bildung des in Fig. 2 dargestellten verformten
Körpers 20 verformt werden. Alternativ kann der Körper 10
auch durch Kreuzwalzen oder Streckziehen bei (T) $M_f$ zum
Körper 20 verformt werden, in welchem Fall die eine Walz-
bzw. Streckziehrichtung dem Doppelpfeil 15, 16 und die
andere Walz- bzw. Streckziehrichtung dem Doppelpfeil 17,
18 entspricht. Vorzugsweise schneiden sich die Richtungen der Doppelpfeile 15, 16 und 17, 18 annähernd in einem Winkel von 90°.

Der Körper 20 wird dann bei (T) $M_f$, gegebenenfalls nach
erneutem Eintauchen in flüssigen Stickstoff oder unter
andauernder Kühlung und jedenfalls unter $T_k$, mit mindestens einer praktisch zylindrischen Durchbrechung 30 versehen, deren Längsachse annähernd senkrecht zur Hauptebene des Körpers 20 verläuft, vorzugsweise durch thermisches Bohren, insbesondere mit Hilfe eines Laserstrahles.

Der Durchmesser der Durchbrechung 30 entspricht einem
Bruchteil der kleinsten Abmessung der Fläche 21, hier
dem Abstand zwischen den Kanten 23, 24 des Körpers 20;
insbesondere ist die kleinste Abmessung der Fläche 21
mehr als doppelt so gross und vorzugsweise mindestens
fünfmal grösser, als der Durchmesser der Durchbrechung 30.
In einem typischen Fall beträgt der Durchmesser der Durchbrechung 50-1000 Mikrometer.

0017677
47/79

Weiterhin (Einwegeffekt) oder erneut (Zweiwegeffekt) in martensitischem Zustand des Körpers 20 werden in dessen Durchbrechung die Enden eines Glasfaserpaares 41, 42 eingeschoben. Der Aussendurchmesser der Glasfasern 41, 42 ist dabei um einige, z. B. 5, Mikrometer kleiner, als der Durchmesser der Durchbrechung 30 (bei (T) $M_f$), aber um einige Mikrometer grösser, als der Durchmesser der Durchbrechung bei (T) $A_f$.

Bei Ueberschreiten von $T_k$ in Richtung (T) $M_f \longrightarrow$ (T) $A_f$ des in Fig. 4 dargestellten Verbindungselementes 20 entsteht die Verbindung 50 der beiden Glasfasern 41, 42 im Verbindungselement 51, indem der Körper 20 wieder in die "Gedächtnisform", d. h. praktisch die Aussenkonfiguration des Körpers 10 von Fig. 1, zurückspringt und dadurch die Glasfasern 41, 42 kraftschlüssig im Körper 51 von Fig. 5 miteinander verbindet.

Bei Verbindungselementen mit Zweiwegeffekt ist die entstehende Verbindung 50 durch erneutes Abkühlen unter $T_k$, d. h. bei (T) $M_f$, wieder lösbar, weil der Körper dann spontan in die gespannte Form 20 zurückspringt.

Bei Verbindungen mit Einwegeffekt ist die entstehende Verbindung 50 durch Abkühlen unter $T_k$ nicht mehr lösbar.

Anstelle einer einzigen Durchbrechung 30 kann der Körper 20 auch mit einer Mehrzahl solcher Durchbrechungen versehen werden. Ferner kann der in Fig. 2 dargestellte Körper 20 wieder auf (T) $A_f$ gebracht und in diesem Zustand mit einer oder mehreren Durchbrechung(en) versehen werden, wenn der Körper aus FG-Legierung mit Zweiwegeffekt besteht.

In diesem Fall muss aber der Durchbrechungsdurchmesser um einige Mikron kleiner sein, als der Aussendurchmesser der Glasfasern 41, 42 oder entsprechender anderer Einzelteile für die Verbindung 50. Der auf diese Weise bei (T) $A_f$ mit Durchbrechungen versehene Körper springt wegen des Zweiwegeffektes bei erneuter Abkühlung unter $T_k$ wieder in die gespannte Form 20 von Fig. 3 zurück und ist dann zur Aufnahme der zu verbindenden Einzelteile 41, 42 und deren kraftschlüssige Halterung befähigt, wenn er nach dem Einführen der Einzelteile 41, 42 wieder auf Temperaturen über $T_k$ anwärmen gelassen wird.

Sowohl bei Verbindungselementen mit Einwegeffekt als auch bei solchen mit Zweiwegeffekt kann die Durchbrechung bereits im Körper 10 vor dem Spannen, d. h. vor Bildung des Körpers 20, gebildet werden, z. B. durch übliches mechanisches Bohren bei (T) $A_f$. In diesem Fall muss aber darauf geachtet werden, dass die Sollform der Durchbrechung bei (T) $M_f$ durch die Verformung nicht wesentlich beeinträchtigt, z. B. nicht verzerrt oder verstaucht wird. Eine bei (T) $A_f$ erzeugte Durchbrechung muss, wie oben erwähnt, um einige Mikrometer kleiner sein, als der Aussendurchmesser der zu verbindenden Einzelteile.

Die in den Fig. 1-5 dargestellte quaderförmige Ausbildung des Körpers 10, 20, 51 ist, wie eingangs angedeutet, nicht kritisch und die Dicke des Körpers kann grösser oder kleiner als dargestellt sein. Ferner müssen die Oberflächen 11, 12 nicht völlig eben sein und können z. B. mit Rillen, Rippen, Noppen oder dergleichen versehen sein. Schliesslich kann die Innenwand der Durchbrechung(en) durch entsprechende Bearbeitungsmethoden auch mit Rillen bzw. Rippen versehen werden, um die Verbindungsfestigkeit zu erhöhen.

In den Fig. 6 und 7 ist in halbschematischer Schnittdarstellung ein aus zwei kreisscheibenförmigen Haltekörpern
62, 62 bestehendes Paar dargestellt. In jedem der Körper
61, 62 aus FG-Legierung ist der Endbereich einer Glasfaser 63, 64 befestigt, und zwar analog wie im Zusammenhang mit den Fig. 1-5 beschrieben, jedoch mit der Abänderung, dass jeweils nur eine Glasfaser in die Oeffnung 30
(Fig. 3) des gespannten Haltekörpers eingeschoben und durch
Entspannen der FG-Legierung im jeweils zugehörigen Haltekörper befestigt wird.

Die Endflächen 611, 621 der Haltekörper 61, 62 mit den
darin befestigten Glasfasern 63, 64 werden dann oberhalb
$T_k$ (d. h. bei $A_f$-Temperatur) plan geschliffen und z. B.
in der in Fig. 7 dargestellten Anordnung 70 zur Bildung
einer planen Kontaktkoppelung der Fasern 63, 64 zusammengefügt. Dabei können die Haltekörper 61, 62 aus FG-Legierung mit gleichen oder mit unterschiedlichen $T_k$-Werten
bestehen.

In der Kopplungsanordnung 70 in Fig. 7 sind die beiden
Körper 61, 62 mit einer aus der hohlzylindrischen Aussenhülse 71 und der kreisscheibenförmigen Innenverschraubung
72 bestehenden konventionellen Muffe verbunden, doch sind
auch andere Kopplungselemente einschliesslich solcher aus
FG-Legierung, vorzugsweise mit einer anderen $T_k$ als diejenige der Körper 61, 62, geeignet. Es versteht sich, dass
jeder der Körper 61, 62 jeweils auch die Enden mehrerer
Fasern einseitig halten kann, so dass eine Anordnung 70
mit planen Kontaktflächen 612, 621 zur Verkopplung der Enden von zwei Fasergruppen verwendet werden kann.

Das erfindungsgemässe Verfahren wird anhand des folgenden Beispiels erläutert:

Es wurden quaderförmige Probestücke aus Formgedächtnislegierungen mit Abmessungen von 3 mm x 5 mm x 10 mm hergestellt, und zwar aus einer FG-Legierung mit 73,5 Gew.% Cu, 16,5 Gew.% Zn, 8 Gew.% Al und 2 Gew. % Ni (Legierung A, $M_f \cong -60^{\circ}C$) sowie einer FG-Legierung mit 75 Gew.% Cu, 15 Gew.% Zn, 8 Gew.% Al und 2 Gew.% Ni (Legierung B, $M_f \cong +50^{\circ}C$). Die Probestücke wurden in martensitischem Zustand in einer Handpresse in der Richtung ihrer grössten Abmessungen um etwa 5 % gestaucht, d. h. die Quaderhöhe mechanisch von 10 mm auf 0,5 mm reduziert. Die Probestücke der Legierung A wurden vorher in einem Alkohol-Kühlbad auf $-10^{\circ}C$ gekühlt und bei dieser Temperatur gestaucht, die Probestücke der Legierung B dagegen bei $+20^{\circ}C$ gestaucht.

Dann wurde, weiterhin in martensitischem Zustand der Probestücke aus FG-Legierung, in jedes der Probestücke ein Loch von 0,85 mm Durchmesser gebohrt, und zwar annähernd in der Mitte der Stirnfläche von 3 x 5 mm und praktisch senkrecht zu dieser. Dann wurden, weiterhin in martensitischem Zustand der jeweiligen FG-Legierung, Stahldrähte, Kupferdrähte und Glasfasern (jeweils mit Durchmessern von 0,8 mm) in die Bohrungen eingeschoben und das jeweilige Probestück mit eingeschobenem Draht bzw. mit eingeschobener Glasfaser über die $T_k$-Temperatur hinaus erwärmt (Legierung A auf Raumtemperatur, Legierung B auf $+100^{\circ}C$). Dabei springt jedes der Probestücke praktisch wieder in seine Form vor dem Stauchen zurück, wodurch sich die Bohrung verengt und den eingeschobenen Draht bzw. die eingeschobene Glasfaser hält.

Die so erhaltenen Verbindungen wurden zur Prüfung der Bindungsfestigkeit auf Zug belastet. Bei den Probestücken aus Legierung B ist zum Herausziehen der Kupferdrahtstücke eine Zuglast von 3 kg, zum Herausziehen der Stahldrahtstücke eine solche von 5 kg erforderlich. Die Glasfasern liessen sich nicht herausziehen, sondern gingen vorher zu Bruch.

Bei den Probestücken aus Legierung A betrugen die zum Herausziehen der Drähte aus den Probestücken erforderlichen Zugbelastungen ein Mehrfaches (bis Fünffaches) der an den Probestücken aus der Legierung B gemessenen Werte; aber auch bei den Probestücken aus Legierung A riss die Glasfaser beim Versuch, sie aus der Verbindung zu ziehen. In beiden Fällen war somit die Zugfestigkeit der Verbindung aus Glasfaser und FG-Legierung grösser als die Zugfestigkeit des Glases.

## Bezugszeichenliste

10  Körper aus FG-Legierung

11  obere Fläche von 10

12  untere Fläche von 10

15  Richtung der ersten Dehnungsachse

16  Umkehrung von 15

17  Richtung der zweiten Dehnungsachse

18  Umkehrung von 17

19  Richtung der Press- oder Stauchkraft

20  Körper nach dem Verformen

21  obere Fläche von 20

23  Seitenkante von 20

24       "            "  "

30  Durchbrechung

41  Glasfaser

42  Glasfaser

50  Verbindung

51  Verbindungselement

61  erster Körper eines Körperpaares aus FG-Legierung

611 Kontaktfläche von 61

62  zweiter Körper des Körperpaares

621 Kontaktfläche von 62

63  Glasfaser

64  Glasfaser

70  Verbindungselement mit Körperpaar

71  Muffenaussenhülse

72  Muffenverschraubung.

- 1 -

0017677

Patentansprüche

1. Verfahren zum Verbinden von länglichen Einzelteilen mit mindestens einem Verbindungselement aus Formgedächtnislegierung, welches Verbindungselement mindestens eine im wesentlichen zylindrische Durchbrechung zur Aufnahme von Endbereichen von zu verbindenden Einzelteilen besitzt und im martensitischen Zustand der Formgedächtnislegierung mechanisch gespannt wird, so dass es in diesem Zustand Endbereiche der Einzelteile aufnehmen und im austenitischen Zustand kraftschlüssig halten kann, wobei mindestens ein Endbereich eines Einzelteiles in die mindestens eine Durchbrechung des Verbindungselementes eingeführt wird, während die Formgedächtnislegierung im mechanisch gespannten martensitischen Zustand vorliegt, und das Verbindungselement dann durch Temperatureinwirkung in den austenitischen Zustand der Formgedächtnislegierung umgewandelt wird, dadurch gekennzeichnet, dass man als Verbindungselement einen Körper (10) aus Formgedächtnislegierung verwendet, der zwei annähernd parallele und praktisch senkrecht zur Längsachse der mindestens einen Durchbrechung (30) verlaufende Aussenflächen (11, 12) besitzt, deren jeweils kleinste Abmessungen um ein Mehrfaches grösser sind, als die lichte Weite der mindestens einen Durchbrechung (30), und dass man den Körper (10) zur mechanischen Spannung des Verbindungselementes im martensitischen Zustand der Formgedächtnislegierung unter zweiachsiger Dehnung (15, 16; 17, 18) in der zu den Aussenflächen parallelen Hauptebene des Körpers verformt.

2. Verfahren nach Patentanspruch 1, dadurch gekennzeichnet, dass man die mindestens eine Durchbrechung (30) nach dem mechanischen Spannen des Verbindungselementes in dem Körper (20) aus der Formgedächtnislegierung bildet, während sich diese in martensitischem Zustand befindet.

3. Verfahren nach Patentanspruch 1 oder 2, dadurch gekennzeichnet, dass der Körper (10) durch Stauch- oder Presskräfte verformt wird, die im wesentlichen senkrecht (19) zur Hauptebene des Körpers (10) wirken.

4. Verfahren nach Patentanspruch 1 oder 2, dadurch gekennzeichnet, dass der Körper (10) durch Kreuzwalzen oder Streckziehen in zwei vorzugsweise senkrecht zueinander verlaufenden, in der Hauptebene des Körpers liegenden Richtungen (15, 16; 17, 18) verformt wird.

5. Verfahren nach einem der Patentansprüche 2-4, dadurch gekennzeichnet, dass die mindestens eine Durchbrechung (30) durch thermisches Bohren, vorzugsweise mit Laserstrahlung, des Körpers (20) im martensitischen Zustand der Formgedächtnislegierung gebildet wird.

6. Verfahren nach einem der Patentansprüche 1-5, dadurch gekennzeichnet, dass als längliche Einzelteile Glasfasern (41, 42) verwendet werden.

7. Verfahren nach einem der Patentansprüche 1-6, dadurch gekennzeichnet, dass jeweils ein Körper (61,62) zur Aufnahme des Endbereiches mindestens eines Einzelteiles (63, 64) verwendet und dann beide Körper (61, 62) miteinander in einer Halterung (71, 72) miteinander verkoppelt werden.

8. Nach dem Verfahren gemäss Patentanspruch 6 erhaltene kraftschlüssige Verbindung (50) von mindestens zwei Glasfasern (41, 42) in einem Körper (51) aus Formgedächtnislegierung.

9. Nach dem Verfahren gemäss Patentanspruch 7 erhaltene Verbindung (70) von mindestens zwei Glasfasern (63, 64) in einem Körperpaar (61, 62) aus Formgedächtnislegierung.

10. Verbindungselement aus Formgedächtnislegierung zur Durchführung des Verfahrens gemäss einem der Patentansprüche 1-7, dadurch gekennzeichnet, dass das Verbindungselement ein blech- oder plattenförmiger Körper (10, 20) ist und mindestens eine praktisch zylindrische Durchbrechung (30) senkrecht zur Blech- bzw. Plattenebene besitzt, wobei die kleinste Abmessung des Körpers (10, 20) in der Blech- bzw. Plattenebene mindestens etwa fünfmal grösser ist, als der Durchmesser der mindestens einen Durchbrechung (30).

11. Verbindungselement nach Patentanspruch 10, dadurch gekennzeichnet, dass die Formgedächtnislegierung Kupfer, Aluminium und Zink als Hauptbestandteile enthält.

12. Verbindungselement nach Patentanspruch 10, dadurch gekennzeichnet, dass die Formgedächtnislegierung Nickel und Titan als Hauptbestandteile enthält.

13. Verbindungselement nach Patentanspruch 10, dadurch gekennzeichnet, dass die Formgedächtnislegierung Nickel, Titan und Kupfer als Hauptbestandteile enthält.

14. Verbindungselement nach einem der Patentansprüche 10-13,
dadurch gekennzeichnet, dass die Formgedächtnislegierung eine Martensit/Austenit-Umwandlungstemperatur von
unter 0°C besitzt.

0017677

1/1

Fig. 1

Fig. 2

Fig. 3

Fig. 4

Fig. 5

Fig. 6

Fig. 7

Europäisches
Patentamt

**EUROPÄISCHER RECHERCHENBERICHT**

0017677
Nummer der Anmeldung

EP 79 200 240.4

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - A - 1 909 489 (RAYCHEM CORP.) <br> * Anspruch 6 * <br> -- | 1 | F 16 B 4/00 <br> H 01 R 4/70 |
| | DE - A1 - 2 544 992 (RAYCHEM LTD.) <br> * Fig. 1 * <br> -- | 1 | |
| | BE - A - 737 387 (RAYCHEM CORP.) <br> * Fig. 1 * <br> -- | 1 | **RECHERCHIERTE SACHGEBIETE (Int. Cl.3)** |
| | DE - A1 - 2 802 798 (RAYCHEM CORP.) <br> * Fig. 7 * <br> -- | 1 | C 22 F 1/00 <br> F 16 B 4/00 <br> H 01 R 4/00 |
| | US - A - 3 977 913 (A. CABO et al.) <br> * Fig. 5 * <br> -- | 2,3, 4 | |
| | US - A - 3 832 243 (H.C. DONKERSLOOT et al.) <br> * Tabelle II * <br> -- | 13 | |
| A | US - A - 3 748 108 (F. ROTHWARF et al.) <br> -- | | **KATEGORIE DER GENANNTEN DOKUMENTE** |
| A | US - A - 3 753 700 (J.D. HARRISON et al.) <br> ---- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |

| X | Der vorliegende Recherchenbericht wurde für alle Patentansprüche erstellt. | &: Mitglied der gleichen Patent-familie, übereinstimmendes Dokument |
|---|---|---|

| Recherchenort | Abschlußdatum der Recherche | Prüfer |
|---|---|---|
| Berlin | 02-12-1979 | ZAPP |

EPA form 1503.1 06.78